# EUROPEAN PATENT SPECIFICATION

(11) **EP 3 324 579 B1**
(45) Date of publication and mention of the grant of the patent: **01.07.2020**
(21) Application number: 16199716.8
(22) Date of filing: 21.11.2016
(51) Int. Cl.: H04L 12/40, G05B 19/418

(54) **GATEWAY DEVICE, METHOD FOR COMMUNICATION, AND COMMUNICATION SYSTEM**
GATEWAY-VORRICHTUNG, VERFAHREN ZUR KOMMUNIKATION UND KOMMUNIKATIONSSYSTEM
DISPOSITIF DE PASSERELLE, PROCÉDÉ DE COMMUNICATION ET SYSTÈME DE COMMUNICATION

(43) Date of publication of application: 23.05.2018
(73) Proprietor: TE Connectivity Nederland B.V., 5222 AR 's Hertogenbosch (NL); Tyco Electronics UK Limited, Swindon, Wiltshire SN3 5HH (GB); TE Connectivity Germany GmbH, 64625 Bensheim (DE)
(72) Inventor: HABRAKEN, Gied, 5551 HX Valkenswaard (NL); HILL, Roderick George, Great Shellford, Cambridgeshire CB22 5AU (GB); ROBERTS, Jonathan, Doddington, Cambridgeshire PE15 0TY (GB); WOEBER, Andreas, 69493 Hirschberg (DE); WALLDORF, Daniel, 65795 Hattersheim (DE)
(74) Representative: Grünecker Patent- und Rechtsanwälte PartG mbB

(56) References cited:
- EP-A2- 2 660 667
- DE-A1-102013 103 242
- US-A1- 2007 233 283

## Description

The present invention relates to a gateway device, which is used to connect a control system, a field device, and a communication device and to the corresponding communication method employed by the gateway device. Furthermore, the present invention relates to a communication system including the gateway device, a control system, a field device, and a communication device.

Generally, a gateway refers to a piece of networking hardware that is equipped for interfacing with at least one further network that uses different protocols. A gateway may contain devices such as communication interfaces, protocol translators, impedance matching devices, rate converters, fault isolators, or signal translators as necessary to provide system interoperability.

A protocol translation/mapping gateway interconnects networks with different network protocol technologies by performing the required protocol conversions. Gateways, also called protocol converters, can operate at any network layer. The activities of a gateway are more complex than that of the router or switch as it communicates using more than one protocol.

A control system is a device, or set of devices, that manages, commands, directs or regulates the behavior of other devices or systems. They can range from a home heating controller using a thermostat controlling a boiler to large industrial control systems which are used for controlling processes or machines. Industrial control system is a general term that encompasses several types of control systems and associated instrumentation used in industrial production, including supervisory control and data acquisition (SCADA) systems, distributed control systems (DCS), and other smaller control system configurations such as programmable logic controllers (PLC) often found in the industrial sectors and critical infrastructures.

Field devices control local operations such as moving actuators, collecting data from sensor systems, and monitoring the local environment for alarm conditions.

A communication device is a hardware device capable of transmitting an analog or digital signal over a wire, or wirelessly. A communication device makes it easier and faster for user to share information across time and space. Communication devices comprise cloud platforms, cell phones, Bluetooth devices, computers, intercoms, televisions, radios, pagers, fax machines, or GPS instruments.

For instance from EP 2 660 667 A2, a cloud gateway is known, which couples industrial devices, such as industrial controllers, sensors, or other devices to a cloud platform. The cloud gateway is able to transform the industrial data and passes these data through interfaces to the cloud platform. Transforming the data means, for example, that context metadata are appended, which can include a time stamp, a location associated with the data, or machine statuses. Additionally, the gateway can receive configuration instructions from the cloud-based applications. For example, these instructions define how frequently data should be uploaded to the cloud.

US 2007/233283 A1 relates to a diagnostic concentrator that is capable of receiving a signal sent from a field device to a process controller. The signal includes a primary process variable and additional information. The diagnostic concentrator also includes a controller that is capable of generating a message corresponding to the received additional information and a second interface that is capable of transmitting the generated message.

DE 10 2013 103 242 A1 relates to accessing field devices using web technologies. An important aspect of is to execute a web server ' on communication chip, which is responsible for the manufacturer-specific representation of device parameters. By using web techniques such as JavaScript it is possible to store the design independently of the representation of the parameter values.

A need remains for such a gateway that provides a direct connection between a field device and a control system. Such a direct connection enables to exchange time critical data between a field device and control system without being disturbed by a communication with the cloud interfaces.

The object is solved by the subject matter of the independent claims. Advantageous embodiments of the present invention are the subject matter of the dependent claims.

In particular, the present invention is base on the idea to provide a gateway, a communication method for the gateway, and a communication system employing such a gateway, which allows directly communicating between at least one field device and at least one control system, and further provides tapped data to be processed by a cloud interface component.

In the following, several embodiments are presented. Embodiments not covered by the claims are to be understood as examples for understanding the invention.

One general embodiment relates to a gateway device, the gateway comprising a control system interface component that is operable to provide a bidirectional communication between at least one external control system and said gateway device, a field device interface component that is operable to provide a communication between at least one external field device and said gateway device, a direct data channel that is operable to exchange data between the control system interface component and the field device interface component, a communication interface component that is operable to provide a bidirectional communication between at least one external communication device and said gateway device, and a splitting unit that is connected to the communication interface and the direct data channel. The splitting unit is operable to bidirectionally tap into the data exchanged over the direct data channel and the communication interface component comprises a processing unit that is operable to process the tapped data.

The advantage of this gateway can be seen in providing a direct channel that allows a communication between a field device and a control system. This channel is especially important for signals that are time critical and which must be passed quickly between a field device and a control system. At the same time, the splitting unit provides the flexibility to tap into the data. Such tapped data can be processed and analyzed.

According to an advantageous embodiment, the control system interface component comprises a fieldbus interface, for instance an EtherCAT, Ethernet/IP, PowerLink, Sercos III, Profibus, a PROFINET switch, and/or a PROFINET interface. Such a fieldbus interface may enable a fast communication between a control system and the gateway device.

Advantageously, the field device interface component comprises a bidirectional and/or a unidirectional communication and is able to communicate employing multiple protocols that are available. The field device interface component comprise a device bus interface, for instance an IO-Link stack, an n-channel master (where n can be any number although mostly 4-, 8- or 16-channel masters are used), a HART, a CANopen interface, an analog voltage interface, and/or an analog current interface.

In order to provide a flexible communication between the gateway and the communication device, the communication interface component may have an interface comprising a wireless, wired, digital, analog, serial, standard Ethernet, Wi-Fi, Cellular, or Bluetooth external connection interface.

A further general embodiment relates to a communication method between a control system, a field device, and a communication device by means of a gateway device. In particular, the method for communicating comprises at a control system interface component, exchanging data between at least one external control system and said gateway device; and at a field device interface component, exchanging data between at least one external field device and said gateway device. Further, the method comprises exchanging data between the field device interface component and the control system interface component over a direct data channel and at a communication interface component, exchanging data between at least one external communication device and said gateway device. Additionally, the method comprises bidirectionally tapping said direct data channel between the sensor interface component and the control system interface component, wherein said tapping comprises exchanging data between the direct data channel and the communication interface component and processing said data that are exchanged between said tapped direct data channel and the communication interface component. As already mentioned above, this method allows communicating directly between a field device and a control system and additionally tapping bidirectionally the directly exchanged data. The processing of the tapped data does not disturb the time critical communication between a field device and a control system.

According to the invention, the processing step comprises an operation of validating, sorting, summarizing, aggregating, analyzing, reporting, compressing, filtering, reformatting, contextualizing, and/or classifying the data to yield a set of processed data. Additionally, the processing step may comprise appending contextual metadata to the data, wherein the contextual metadata includes at least one of a date, a time, a shift, a production area, a product, a machine state, an employee identifier, a lot number, an active alarm, and/or a hierarchical organizational tag.

According to the invention, the tapping comprises a receiving step and a sending step. In particular, the receiving step comprises receiving the data by the communication interface, wherein said received data are at least received from the field device interface or the communication interface. This allows listening to the data exchanged between the field device interface and the communication interface without disturbing the communication between the field device and the control system. The sending step comprises sending data from the communication interface component to at least one of the field device interface component, the field device, the control system interface component, and the control system, wherein said sent data may comprise software for modifying at least one of the communication interface component, the field device interface component, the field device, the control system interface component, and the control system interface. This allows that the external communication device is able to configure software for devices and interfaces connected to the gateway based upon data exchanged between the field device interface and the control system interface without disturbing the communication of the latter both.

Advantageously, exchanging data at the control system interface component further comprises at least one of processing and converting the data to yield a set of converted data and/or exchanging data at the control interface component further comprises at least one of processing or converting the data to yield a set of converted data. This allows a broad flexibility in the communication between external devices and the gateway. Further, the communication interface is programmed, wherein the programming comprises modifying a software content based upon the processed data exchanged between the communication interface component and the communication device. Thus, the communication interface is intelligent and can optimize the software of devices and interfaces connected to the gateway.

A further general embodiment relates to a field device communication system comprising a gateway device, at least one control system connected to the gateway device as discussed above, at least one field device, and at least one communication device. As already mentioned above, such a system provides a fast and direct communication channel between a field device and a control system. Additionally, such a system is operable to optimize the system by processing data exchanged over the direct communication channel without disturbing the direct communication.

A particularly advantageous control system employs a programmable logic controller (PLC), a supervisory control and data acquisition (SCADA) system, or a distributed control system (DCS). Further an advantageous field device employs a sensor or an actuator. Additionally, an advantageous communication device comprises a device such as a cloud platform, a cell phone, a Bluetooth device, a computer, an intercom, a television, a radio, a pager, a fax machine, or a GPS instrument.

The accompanying drawings are incorporated into the specification and form a part of the specification to illustrate several embodiments of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described embodiments.

Furthermore, several aspects of the embodiments may form-individually or in different combinations-solutions according to the present invention. Further features and advantages will become apparent from the following more particular description of the various embodiments of the invention as illustrated in the accompanying drawings, in which like references refer to like elements, and wherein:
- **FIG. 1**: is a schematic block diagram of the communication system of the present invention;
- **FIG. 2**: is a schematic block diagram of the communication method of the present invention;
- **FIG. 3**: is a detailed view of the communication interface component hardware;
- **FIG. 4**: is a detailed view of the processing unit employed by the communication interface component;
- **FIG. 5**: is a detailed diagram of a communication system according to an advantageous embodiment of the present invention;
- **FIG. 6**: is a detailed block diagram of a communication system according to an alternative embodiment of the present invention.

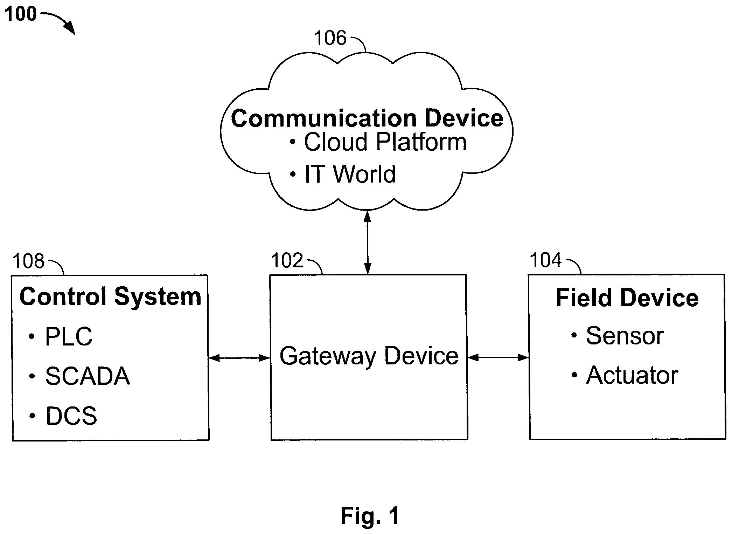

The present invention will now be explained in more detail with reference to the Figures. Referring to Fig. 1, a communication system 100 according to the present invention is shown. The communication system 100 comprises a gateway device 102 that is able to directly connect a field device 104 and a control system 108. The gateway device 102 is further connected to a communication device 106.

The field device 104 controls local operations such as moving actuators, collecting data from sensor systems, and monitoring the local environment for alarm conditions. The control system 108 manages commands, directs or regulates the behavior of other devices or systems. A preferable control system is a supervisory control and data acquisition (SCADA) systems, distributed control systems (DCS), or a programmable logic controllers (PLC) often found in the industrial sectors and critical infrastructures. The communication device 106 facilitates a fast and user friendly communication by employing cloud platforms, cell phones, Bluetooth devices, computers, intercoms, televisions, radios, pagers, fax machines, or GPS instruments.

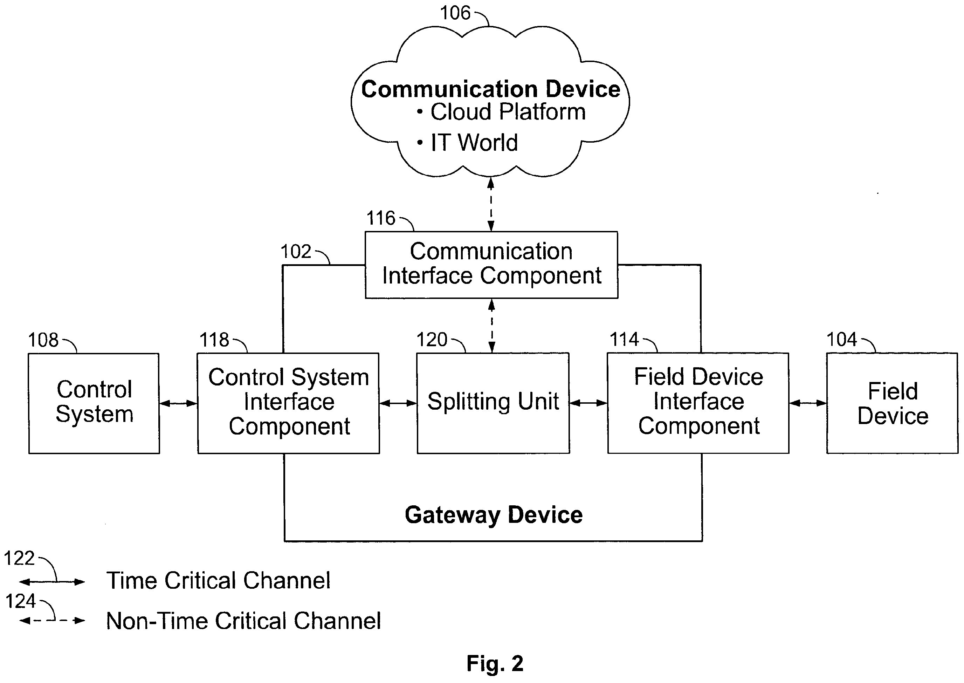

Referring to Fig. 2, the gateway device 102 is shown in greater detail. The gateway device 102 exchanges information with the field device 104 by the field device interface component 114. This communication may be bidirectional, such as sending a command to move an actuator and receive status information of the actuator. In a further embodiment, this communication may be unidirectional, such as receiving measurement values from a sensor or sending data to an actuator. Preferably, a field device interface component 114 comprises a IO-Link stack, n-channel master (where n can be any number although mostly 4-, 8- or 16-channel masters are used), a HART, a CANopen interface, an analog voltage interface, and an analog current interface. In one embodiment, the field device interface component 114 can be programmed. Programming includes that data exchanged between the field device 104 and the gateway device 102 are converted or translated by using a protocol as described above in the background section.

The gateway device 102 exchanges information with the control system 108 by the control system interface component 118. The communication at the control system interface component 118 with the control system 108 may be bidirectional. Exchanged is information that is used to regulate, manage, comment, or direct the behavior of the control system 108. Further, the gateway device 102 may receive data from the control system 108 such as status information. A control system interface component 118 comprises preferably an EtherCAT, Ethernet/IP, PowerLink, Sercos III, Profibus, a PROFINET switch, and a PROFINET interface.

The time critical direct channel 122 connects the control system interface component 118 and the field device interface component 114. This direct channel 122 enables to exchange data between the control system interface component 118 and the field device interface component 114. These data may be time critical data and may be exchanged with a certain period.

The gateway device 102 shown in Fig. 2 further comprises a splitting unit 120 that is connected to the direct channel 122. The splitting unit 102 does not disturb the data exchanged by the time critical channel 122. The splitting unit 120 is connected to the communication interface component 116 by a non-time critical channel 124. The splitting unit 120 may be a switch, a separator, or any other device that is operable to bidirectionally tap into the data exchanged by the time critical direct channel 122.

The splitting unit 120 can receive data from a field device 104, a field device interface component 114, a control system interface component 118, or a control system 108 and send this data to the communication interface component 116 via the non-time critical channel 124. This data may contain information about sensor or actuator values, alarms or the status of a control system 108 or an actuator.

The splitting unit 120 can further receive data from the communication interface component 116 by the non-time critical channel 124 and send these data via the time critical channel 122 to a control system interface component 118, a control system 108, a field device interface component 114, or a field device 104. This data may contain a software update or a software modification for said devices and interfaces.

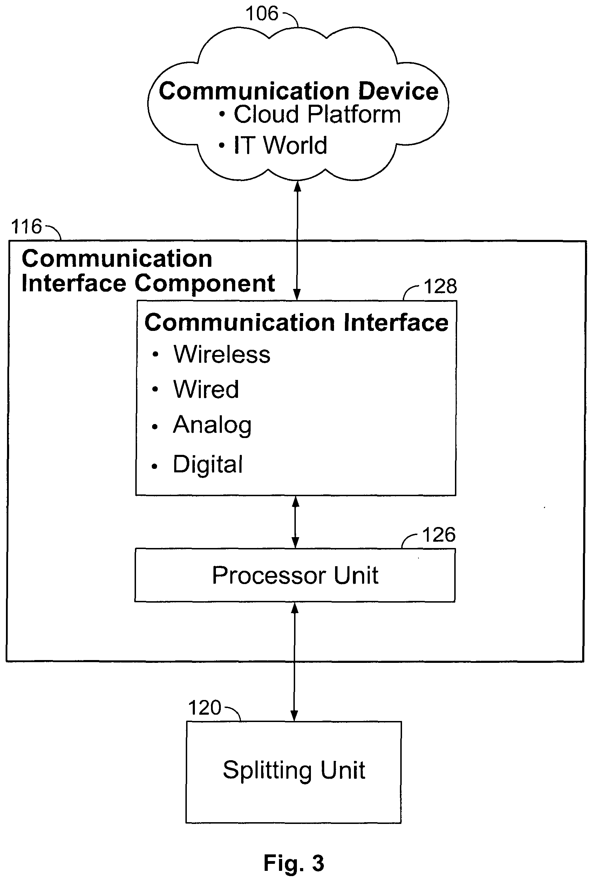

The communication interface component 116 is connected to the splitting unit 120 and to the communication device 106. The communication interface component 106 is further described with reference to Fig. 3. The communication interface component 106 comprises a communication interface 128 and a processing unit 126. The processing unit 126 is able to process data received from the splitting unit 120 and the communication interface 128. The communication interface 128 connects the communication interface component 116 and the communication device 106. The communication interface 128 is most preferably a wireless, wired, digital, analog, serial, standard Ethernet, Wi-Fi, Cellular, or Bluetooth communication interface.

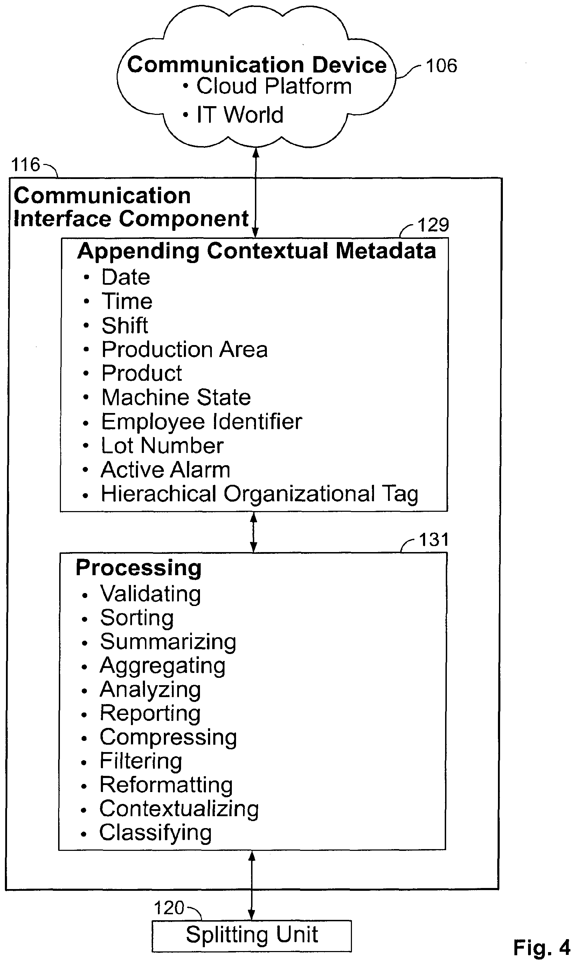

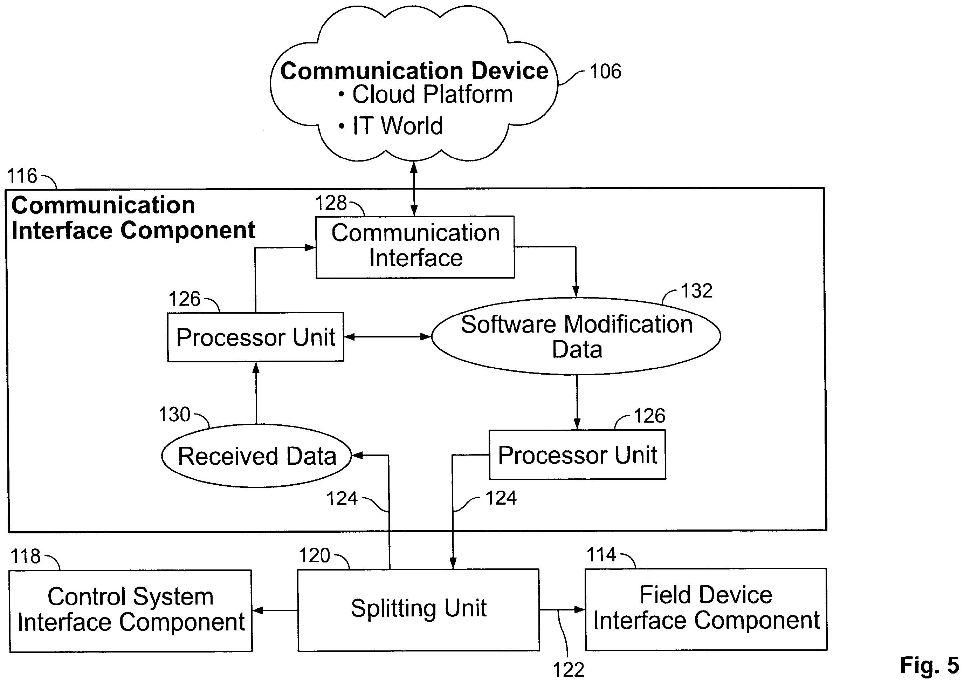

The processing unit 126 is further described with reference to Fig. 4. The processing unit 126 is able to perform processing step 131 on the data and to append contextual metadata 129. The processing step 131 comprises validating, sorting, summarizing, aggregating, analyzing, reporting, compressing, filtering, reformatting, contextualizing, and/or classifying the data to yield a set of processed data. Appending contextual metadata 129 is most preferably append a date, a time, a shift, a production area, a product, a machine state, an employee identifier, a lot number, an active alarm, and/or a hierarchical organizational tag to the data. With reference to Fig. 5 a further advantageous embodiment of the present invention is described. The communication interface component 116 receives data 130 from the splitting unit 120. These data contain control system information or information of a field device. The data are processed by the processing unit 126 and sent to the communication interface 128. Processing the data may be performed as described above with reference to Fig. 4.

In one embodiment the communication interface component 128 transmits the data to the communication device 106. Based on the received data 130, which is additionally processed by the processor unit 126, the communication device 106 can create software modification data 132. The software modification data 132 are exchanged with the communication interface 128 and the processor unit 126. The software modification data 132 may be used to modify the software of the processing unit 126. The software modification data 132 may further be transmitted via the non-time critical channel 124 to the splitting unit and then be passed to the control system interface component 118, the control system 108, the field device interface component 114, or the field device 104. Such software modification data 132 may be able to modify the software of the control system interface component 118, the control system 108, the field device interface component 114, or the field device 104.

In one alternative embodiment, the processing unit 126 processes the data so that software modification data 132 are retrieved. The software modification data 132 may be used to modify the software of the processing unit 126 and/or be transmitted via the non-time critical channel 124 to the splitting unit 120 an then be passed to the control system interface component 118, the control system 108, the field device interface component 114, or the field device 104. Such software modification data 132 may be able to modify the software of the control system interface component 118, the control system 108, the field device interface component 114, or the field device 104.

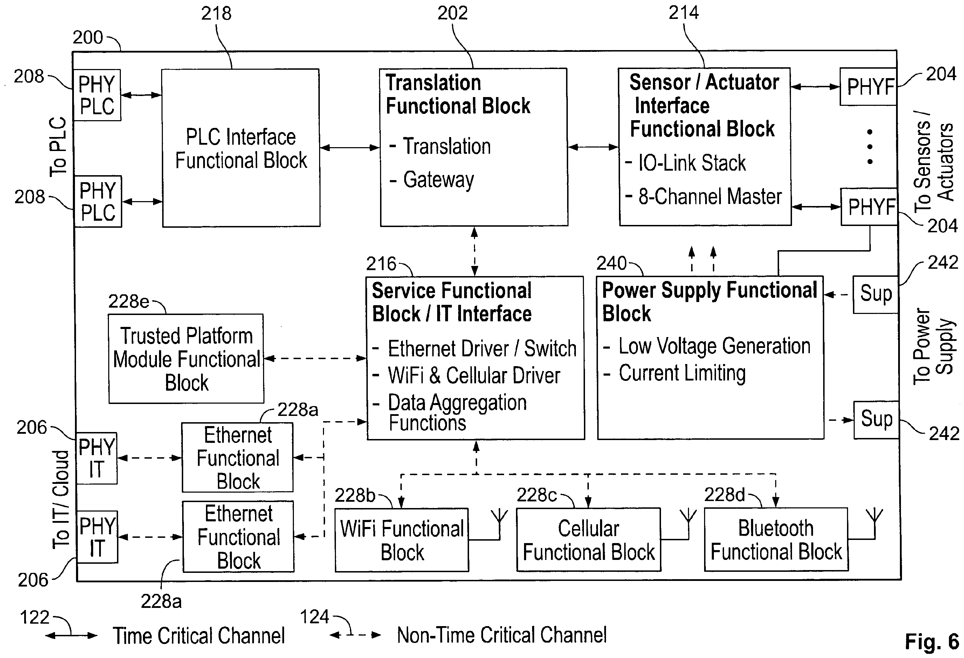

With reference to Fig. 6 a further advantageous embodiment of a specific communication system 200 is shown. A translation functional block 202, forming the gateway device 102, is connected to a sensor/ actuator interface functional block 214, forming the field device interface component 114. The translation functional block 202 is further connected to a PLC interface functional block 218 (forming the control system interface component 118). The PLC functional block 218 is further connected to a physical PLC device 208 (PHYPLC), which represents the control system 108. The sensor/ actuator interface functional block 214 is connected to physical sensor and actuator devices 204 (PHYF), which forms the field devices 104. The sensor actuator interface block 214 preferably comprises an IO-Link Stack or an 8-channel Master. The physical PLC devices 208, the PLC interface functional block 218, the translation functional block 202, the sensor actuator functional block 214, and the physical sensor actuator devices are connected via a time critical channel 122.

The translation functional block 202 is further connected via a non-time critical channel 124 to a service functional block/IT interface 216, which might forms the communication interface component 116. The service functional block/IT interface 216 comprises an Ethernet driver, a switch, a WiFi driver, a cellular driver. The service functional block/IT interface 216 further comprises a data aggregation by employing functions. The service functional block/IT interface 216 is connected to a communication interface 128, preferably at least one Ethernet functional block 228a, a WiFi functional block 228b, a Cellular functional block 228c, a Bluetooth functional block 228d, and a trusted platform module functional block 228e. These communication interfaces 128 are connected wireless or wired to a physical IT/ Cloud device 206 (PHYIT).

A power supply functional block 240 is connected to a power supply 242 (SUP). The power supply functional block 240 comprises a low voltage generation and a current limitation. The power supply functional block 240 feeds the physical sensor/actuator devices 204, the sensor/actuator interface functional block 214, the translation functional block 202, the PLC interface functional block 218, the physical PLC devices 208, and the service functional block/IT interface 216.

**REFERENCE NUMERALS**

| **Reference Numeral** | **Description** |
|---|---|
| 100 | Communication system |
| 102 | Gateway device |
| 104 | Field device |
| 106 | Communication device |
| 108 | Control system |
| 114 | Field device interface component |
| 116 | Communication interface component |
| 118 | Control system interface component |
| 120 | Splitting unit |
| 122 | Time critical channel |
| 124 | Non-time critical channel |
| 126 | Processor unit |
| 128 | Communication interface |
| 129 | Appending contextual metadata |
| 130 | Received data |
| 131 | Data processing step |
| 132 | Software modification data |
| 200 | Specific communication system |
| 202 | Translation functional block |
| 204 | Physical sensor/actuator device |
| 206 | Physical IT/Cloud device |
| 208 | Physical plc device |
| 214 | Sensor/ Actuator interface functional block |
| 216 | Service functional block/ IT interface |
| 228a | Ethernet functional block |
| 228b | Wi-Fi functional block |
| 228c | Cellular functional block |
| 228d | Bluetooth functional block |
| 228e | Trusted platform module functional block |
| 240 | Power supply functional block |
| 242 | Power supply |

## Claims

1. A gateway device, comprising:
a control system interface component (118) that is operable to provide a bidirectional communication between at least one external control system (108) and said gateway device (102);
a field device interface component (114) that is operable to provide a communication between at least one external field device (104) and said gateway device (102);
a direct data channel (122) that is operable to exchange data between the control system interface component (118) and the field device interface component (114);
a communication interface component (116) that is operable to provide a bidirectional communication between at least one external communication device (106) and said gateway device (102);
a splitting unit (120) that is connected to the communication interface component (118) and the direct data channel (122), wherein said splitting unit (120) is operable to receive first data from the field device (104), the field device interface component (114), the control system interface component (118), or the control system (108) via the direct data channel (122) and send the first data via a non-time critical channel (124) to the communication interface component (116); and
**characterized in that:**
said communication interface component (116) comprises a processing unit (126) that is operable to validate, sort, summarize, aggregate, compress, filter, reformat, contextualize, and/or classify the first data to yield a set of processed data, and
the splitting unit is further operable to receive second data from the communication interface component (116) via the non-time critical channel (124) and send the second data via the direct data channel (122) to the control system interface component (118), the control system (108), the field device interface component (114), or the field device (104).

2. The gateway device according to claim 1, wherein the control system interface component (118) comprises at least one of an EtherCAT, Ethernet/IP, PowerLink, Sercos III, Profibus, a PROFINET switch, and a PROFINET interface.

3. The gateway device according to claim 1 or 2, wherein the field device interface component (114) comprises at least one IO-Link stack, a channel master, a HART, a CANopen interface, an analog voltage interface, and an analog current interface.

4. The gateway device according to one of the claims 1 to 3, wherein the communication interface component (116) comprises at least one wireless, wired, digital, analog, serial, standard Ethernet, Wi-Fi, Cellular, or Bluetooth external connection interface.

5. A method for communication by means of a gateway device (102), the method comprising the following steps:
at a control system interface component (118), exchanging data between at least one external control system (108) and said gateway device (102);
at a field device interface component (114), exchanging data between at least one external field device (104) and said gateway device (102);
exchanging data between the field device interface component (114) and the control system interface component (118) over a direct data channel;
at a communication interface component (116), exchanging data between at least one external communication device (106) and said gateway device (102);
receiving first data by a splitting unit (120), wherein the first data are received from the field device (104), the field device interface component (114), the control system interface component (118), or the control system (108) via the direct data channel (122) and sending the first data via a non-time critical channel (124) to the communication interface component (116);
processing said data that are exchanged between said tapped direct data channel and the communication interface component (116).
**characterized in that:**
the processing step comprises at least one of validating, sorting, summarizing, aggregating, compressing, filtering, reformatting, contextualizing, and/or classifying the data to yield a set of processed data;
the method further comprising the step of receiving, by the splitting unit, second data from the communication interface component (116) via the non-time critical channel (124); and sending the second data via the direct data channel (122) to the control system interface component (118), the control system (108), the field device interface component (114), or the field device (104).

6. The method according to claim 5, wherein the processing step comprises appending contextual metadata to the data, wherein the contextual metadata includes at least one of a date, a time, a shift, a production area, a product, a machine state, an employee identifier, a lot number, an active alarm, and/or a hierarchical organizational tag.

7. The method according to one of the claims 5 to 6, wherein the second data comprises software for modifying at least one of the communication interface component (116), the field device interface component (114), the field device (104), the control system interface component (118), and the control system (108).

8. The method according to one of the claims 5 to 7, wherein exchanging data at the control system interface component (118) further comprises at least one of processing and converting the data to yield a set of converted data.

9. The method according to one of the claims 5 to 8, wherein exchanging data at the control system interface component (118) further comprises at least one of processing or converting the data to yield a set of converted data, and/or wherein the communication interface is programmed, wherein the programming comprises modifying a software content based upon the processed data exchanged between the communication interface component (116) and the communication device (106).

10. A field device communication system comprising:
a gateway device (102) according to one of the claims 1 to 4;
at least one control system (108) connected to the gateway device (102);
at least one field device (104); and
at least one communication device (106).

11. The field device communication system according to claim 10, wherein the control system (106) comprises at least one of a programmable logic controller,PLC, a supervisory control and data acquisition, SCADA, system, and a distributed control system, DCS.

12. The field device communication system according to claim 10 or 11, wherein the field device (104) comprises at least one sensor and/or at least one actuator.

13. The field device communication system according to one of the claims 10 to 12, wherein the communication device (106) comprises at least one cloud platform, a cell phone, a Bluetooth device, a computer, an intercom, a television, a radio, a pager, a fax machine, and a GPS instrument.

## Patentansprüche

1. Gateway-Vorrichtung, mit:
einer Steuerungssystemschnittstellenkomponente (118), die ausgebildet ist, eine bidirektionale Kommunikation zwischen mindestens einem externen Steuerungssystem (108) und der Gateway-Vorrichtung (102) bereitzustellen;
einer Feldgerätschnittstellenkomponente (114), die ausgebildet ist, eine Kommunikation zwischen mit mindestens einem externen Feldgerät (104) und der Gateway-Vorrichtung (102) bereitzustellen;
einem direkten Datenkanal (122), der ausgebildet ist, Daten zwischen der Steuerungssystemschnittstellenkomponente (118) und der Feldgerätschnittstellenkomponente (114) auszutauschen;
einer Kommunikationsschnittstellenkomponente (116), die ausgebildet ist, eine bidirektionale Kommunikation zwischen mindestens einer externen Kommunikationseinrichtung (106) und der Gateway-Vorrichtung (102) bereitzustellen;
einer Teilungseinheit (120), die mit der Kommunikationsschnittstellenkomponente (118) und dem direkten Datenkanal (122) verbunden ist, wobei die Teilungseinheit (120) ausgebildet ist, erste Daten aus dem Feldgerät (104), der Feldgerätschnittstellenkomponente (114), der Steuerungssystemschnittstellenkomponente (118) oder dem Steuerungssystem (108) über den direkten Datenkanal (122) zu empfangen und die ersten Daten über einen nicht-zeitkritischen Kanal (124) an die Kommunikationsschnittstellenkomponente (116) zu senden;
**dadurch gekennzeichnet, dass**
die Kommunikationsschnittstellenkomponente (116) eine Verarbeitungseinheit (126) aufweist, die ausgebildet ist, die ersten Daten zu validieren, zu sortieren, zusammenzufassen, zu aggregieren, zu komprimieren, zu filtern, umzuformatieren, zu kontextualisieren und/oder zu klassifizieren, um eine Menge an verarbeiteten Daten zu erhalten, und
die Teilungseinheit ferner ausgebildet ist, zweite Daten aus der Kommunikationsschnittstellenkomponente (116) über den nicht-zeitkritischen Kanal (124) zu empfangen und die zweiten Daten über den direkten Datenkanal (122) an die Steuerungssystemschnittstellenkomponente (118), das Steuerungssystem (108), die Feldgerätschnittstellenkomponente (114) oder das Feldgerät (104) zu senden.

2. Gateway-Vorrichtung nach Anspruch 1, wobei die Steuerungssystemschnittstellenkomponente (118) EtherCAT, Etherne/IP, PowerLink, Sercos III, Profibus, eine PROFINET-Schalteinheit, und/oder eine PROFINET-Schnittstelle umfasst.

3. Gateway-Vorrichtung nach Anspruch 1 oder 2, wobei die Feldgerätschnittstellenkomponente (114) einen Eingabe/Ausgabe-Link-Stapel, einen Kanalmaster, HART, eine CANopen-Schnittstelle, eine Analogspannungsschnittstelle, und/oder eine Analogstromschnittstelle umfasst.

4. Gateway-Vorrichtung nach einem der Ansprüche 1 bis 3, wobei die Kommunikationsschnittstellenkomponente (116) eine Schnittstelle in drahtloser, verdrahteter, digitaler, analoger, serieller Form, in Standardethernet-, Wi-Fi-, Funknetz-Form, und/oder in Form einer externen Bluetooth-Verbindung umfasst.

5. Kommunikationsverfahren mittels einer Gateway-Vorrichtung (102), wobei das Verfahren die folgenden Schritte umfasst:
in einer Steuerungssystemschnittstellenkomponente (118), Austauschen von Daten zwischen mindestens einem externen Steuerungssystem (108) und der Gateway-Vorrichtung (102);
in einer Feldgerätschnittstellenkomponente (114), Austauschen von Daten zwischen mindestens einem externen Feldgerät (104) und der Gateway-Vorrichtung (102);
Austauschen von Daten zwischen der Feldgerätschnittstellenkomponente (114) und der Steuerungssystemschnittstellenkomponente (118) über einen direkten Datenkanal;
in einer Kommunikationsschnittstellenkomponente (116), Austauschen von Daten zwischen mindestens einer externen Kommunikationsvorrichtung (106) und der Gateway-Vorrichtung (102);
Empfangen von ersten Daten mittels einer Teilungseinheit (120), wobei die ersten Daten aus dem Feldgerät (104), der Feldgerätschnittstellenkomponente (114), der Steuerungssystemschnittstellenkomponente (118) oder dem Steuerungssystem (108) über den direkten Datenkanal (122) empfangen werden, und Senden der ersten Daten über einen nicht-zeitkritischen Kanal (124) an die Kommunikationsschnittstellenkomponente (116);
Verarbeiten der Daten, die zwischen dem abgegriffenen direkten Datenkanal und der Kommunikationsschnittstellenkomponente (116) ausgetauscht werden,
**dadurch gekennzeichnet, dass**
der Verarbeitungsschritt umfasst: Validieren, Sortieren, Zusammenfassen, Aggregieren, Komprimieren, Filtern, Umformatieren, Kontextualisieren und/oder Klassifizieren der Daten, um eine Menge an verarbeiteten Daten zu erhalten;
das Verfahren ferner den Schritt umfasst: Empfangen, durch die Teilungseinheit, von zweiten Daten aus der Kommunikationsschnittstellenkomponente (116) über den nicht-zeitkritischen Kanal (124); und Senden der zweiten Daten über den direkten Datenkanal (122) an die Steuerungssystemschnittstellenkomponente (118), das Steuerungssystem (108), die Feldgerätschnittstellenkomponente (114) oder das Feldgerät (104).

6. Verfahren nach Anspruch 5, wobei der Verarbeitungsschritt umfasst: Anhängen von Kontextmetadaten an die Daten, wobei die Kontextmetadaten ein Datum, eine Zeit, eine Verschiebung, einen Herstellungsbereich, ein Produkt, einen Maschinenzustand, eine Angestelltenkennung, eine Chargennummer, einen aktiven Alarm, und/oder eine hierarchische Organisationsmarke enthalten.

7. Verfahren nach Anspruch 5 oder 6, wobei die zweiten Daten Software zum Modifizieren der Kommunikationsschnittstellenkomponente (116), der Feldgerätschnittstellenkomponente (114), des Feldgeräts (104), der Steuerungssystemschnittstellenkomponente (118), und/oder des Steuerungssystems (108) umfassen.

8. Verfahren nach einem der Ansprüche 5 bis 7, wobei Austauschen der Daten in der Steuerungssystemschnittstellenkomponente (118) ferner Verarbeiten und/oder Umwandeln der Daten umfasst, um eine Menge aus umgewandelten Daten zu erhalten.

9. Verfahren nach einem der Ansprüche 5 bis 8, wobei Austauschen der Daten in der Steuerungssystemschnittstellenkomponente (118) ferner umfasst: Verarbeiten und/oder Umwandeln der Daten, zum Erhalten einer Menge aus umgewandelten Daten, und/oder wobei die Kommunikationsschnittstelle programmiert ist, wobei die Programmierung ein Modifizieren eines Softwareinhalts auf der Grundlage der verarbeiteten Daten umfasst, die zwischen der Kommunikationsschnittstellenkomponente (116) und der Kommunikationseinrichtung (106) ausgetauscht werden.

10. Feldgerätkommunikationssystem mit:
einer Gateway-Vorrichtung (102) nach einem der Ansprüche 1 bis 4;
mindestens einem Steuerungssystem (108), das mit der Gateway-Vorrichtung (102) verbunden ist;
mindestens einem Feldgerät (104); und
mindestens einer Kommunikationseinrichtung (106).

11. Feldgerätkommunikationssystem nach Anspruch 10, wobei das Steuerungssystem (106) eine speicherprogrammierbare Steuerung, PLC, ein übergeordnetes Steuerungs- und Datenerfassungs-, SCADA-, System, und/oder ein verteiltes Steuerungssystem, DCS, umfasst.

12. Feldgerätkommunikationssystem nach Anspruch 10 oder 11, wobei das Feldgerät (104) mindestens einen Sensor und/oder mindestens einen Aktuator umfasst.

13. Feldgerätkommunikationssystem nach einem der Ansprüche 10 bis 12, wobei die Kommunikationseinrichtung (106) eine Cloud-Plattform, ein Funktelefon, ein Bluetooth-Gerät, einen Computer, eine Interkom-Einheit, ein Fernsehgerät, ein Rundfunkgerät, ein Signalisierungsgerät, ein Faxgerät, und/oder ein GPS-Instrument umfasst.

## Revendications

1. Dispositif de passerelle, comprenant :
un composant d'interface de système de commande (118) qui est opérationnel pour établir une communication bidirectionnelle entre au moins un système de commande externe (108) et ledit dispositif de passerelle (102) ;
un composant d'interface de dispositif sur site (114) qui est opérationnel pour établir une communication entre au moins un dispositif sur site externe(104) et ledit dispositif de passerelle (102) ;
un canal de données direct (122) qui est opérationnel pour échanger des données entre le composant d'interface de système de commande (118) et le composant d'interface de dispositif sur site (114) ;
un composant d'interface de communication (116) qui est opérationnel pour établir une communication bidirectionnelle entre au moins un dispositif de communication externe (106) et ledit dispositif de passerelle (102) ;
une unité de division (120) qui est connectée au composant d'interface de communication (118) et au canal de données direct (122), dans lequel ladite unité de division (120) est opérationnelle pour recevoir des premières données provenant du dispositif sur site (104), du composant d'interface de dispositif sur site (114), du composant d'interface de système de commande (118), ou du système de commande (108) via le canal de données direct (122) et envoyer les premières données via un canal non critique en termes de temps (124) au composant d'interface de communication (116) ; et
**caractérisé en ce que** :
ledit composant d'interface de communication (116) comprend une unité de traitement (126) qui est opérationnelle pour valider, trier, résumer, agréger, compresser, filtrer, reformater, contextualiser, et/ou classer les premières données pour générer un ensemble de données traitées, et
l'unité de division est en outre opérationnelle pour recevoir des secondes données provenant du composant d'interface de communication (116) via le canal non critique en termes de temps (124) et envoyer les secondes données via le canal de données direct (122) au composant d'interface de système de commande (118), au système de commande (108), au composant d'interface de dispositif sur site (114), ou au dispositif sur site (104).

2. Dispositif de passerelle selon la revendication 1, dans lequel le composant d'interface de système de commande (118) comprend au moins l'un parmi EtherCAT, Ethernet/IP, PowerLink, Sercos III, Profibus, un commutateur PROFINET, et une interface PROFINET.

3. Dispositif de passerelle selon la revendication 1 ou 2, dans lequel le composant d'interface de dispositif sur site (114) comprend au moins une colonne IO-Link, un canal maître, un HART, une interface CANopen, une interface en tension analogique, et un interface en courant analogique.

4. Dispositif passerelle selon l'une des revendications 1 à 3, dans lequel le composant d'interface de communication (116) comprend au moins une interface de connexion externe sans fil, câblée, numérique, analogique, série, Ethernet standard, Wi-Fi, Cellulaire, ou Bluetooth.

5. Procédé de communication au moyen d'un dispositif de passerelle (102), le procédé comprenant les étapes suivantes consistant à :
au niveau d'un composant d'interface de système de commande (118), échanger des données entre au moins un système de commande externe (108) et ledit dispositif de passerelle (102) ;
au niveau d'un composant d'interface de dispositif sur site (114), échanger des données entre au moins un dispositif sur site externe (104) et ledit dispositif de passerelle (102) ;
échanger des données entre le composant d'interface de dispositif sur site (114) et le composant d'interface de système de commande (118) sur un canal de données direct ;
au niveau d'un composant d'interface de communication (116), échanger des données entre au moins un dispositif de communication externe (106) et ledit dispositif de passerelle (102) ;
recevoir des premières données par une unité de division (120), les premières données étant reçues en provenance du dispositif sur site (104), du composant d'interface de dispositif sur site (114), du composant d'interface de système de commande (118), ou du système de commande (108) via le canal de données direct (122) et envoyer des premières données via un canal non critique en termes de temps (124) au composant d'interface de communication (116) ;
traiter lesdites données qui sont échangées entre ledit canal de données direct exploité et le composant d'interface de communication (116) ;
**caractérisé en ce que** :
l'étape de traitement comprend au moins l'une des étapes consistant à valider, trier, résumer, agréger, compresser, filtrer, reformater, contextualiser, et/ou classer les données pour générer un ensemble de données traitées ;
le procédé comprenant en outre l'étape consistant à recevoir, par l'unité de division, des secondes données provenant du composant d'interface de communication (116) via le canal non critique en termes de temps (124) ; et envoyer les secondes données via le canal de données direct (122) au composant d'interface de système de commande (118), au système de commande (108), au composant d'interface de dispositif sur site (114), ou au dispositif sur site (104).

6. Procédé selon la revendication 5, dans lequel l'étape de traitement comprend l'ajout de métadonnées contextuelles aux données, les métadonnées contextuelles comprenant au moins l'un parmi une date, une heure, une période de travail, une zone de production, un produit, un état de machine, un identifiant d'employé, un numéro de lot, une alarme active, et/ou une étiquette organisationnelle hiérarchique.

7. Procédé selon l'une des revendications 5 à 6, dans lequel les secondes données comprennent un logiciel pour modifier au moins l'un parmi le composant d'interface de communication (116), le composant d'interface de dispositif sur site (114), le dispositif sur site (104), le composant d'interface de système de commande (118), et le système de commande (108).

8. Procédé selon l'une des revendications 5 à 7, dans lequel l'échange de données au niveau du composant d'interface de système de commande (118) comprend en outre au moins l'un parmi un traitement et une conversion des données pour générer un ensemble de données converties.

9. Procédé selon l'une des revendications 5 à 8, dans lequel l'échange de données au niveau du composant d'interface de système de commande (118) comprend en outre au moins l'un parmi un traitement ou une conversion des données pour générer un ensemble de données converties, et/ou dans lequel l'interface de communication est programmée, la programmation comprenant la modification d'un contenu logiciel sur la base des données traitées échangées entre le composant d'interface de communication (116) et le dispositif de communication (106).

10. Système de communication pour dispositif sur site comprenant :
un dispositif de passerelle (102) selon l'une des revendications 1 à 4 ;
au moins un système de commande (108) connecté au dispositif de passerelle (102) ;
au moins un dispositif sur site (104) ; et
au moins un dispositif de communication (106).

11. Système de communication pour dispositif sur site selon la revendication 10, dans lequel le système de commande (106) comprend au moins l'un parmi un automate programmable industriel, PLC, un système de commande de supervision et d'acquisition de données, SCADA, et un système de commande distribuée, DCS.

12. Système de communication pour dispositif sur site selon la revendication 10 ou 11, dans lequel le dispositif sur site (104) comprend au moins un capteur et/ou au moins un actionneur.

13. Système de communication pour dispositif sur site selon l'une des revendications 10 à 12, dans lequel le dispositif de communication (106) comprend au moins une plate-forme cloud, un téléphone portable, un dispositif Bluetooth, un ordinateur, un interphone, une télévision, une radio, un téléavertisseur, un télécopieur, et un instrument GPS.
